# EUROPÄISCHE PATENTSCHRIFT

(11) **EP 1 033 571 B1**
(45) Veröffentlichungstag und Bekanntmachung des Hinweises auf die Patenterteilung: **05.07.2006**
(21) Anmeldenummer: 00102783.8
(22) Anmeldetag: 10.02.2000
(51) Int. Cl.: G01N 27/90

(54) **Wirbelstromsonde**
Eddy current sensor
Capteur de courant de Foucault

(30) Priorität: 04.03.1999 DE 19909555
(43) Veröffentlichungstag der Anmeldung: 06.09.2000
(73) Patentinhaber: intelligeNDT Systems & Services GmbH & Co. KG, 91058 Erlangen (DE)
(72) Erfinder: Pöpperl, Dieter, 91074 Herzogenaurach (DE); Gemmer-Berkbilek, Kerstin, 96193 Wachenroth (DE); Gebhardt, Rainer, Dr., 91054 Buckenhof (DE)
(74) Vertreter: Mörtel & Höfner

(56) Entgegenhaltungen:
- EP-A- 0 512 796
- GB-A- 2 186 372
- SU-A- 700 830
- SU-A- 987 508
- US-A- 4 706 020
- US-A- 5 659 248
- HAMASAKI Y ET AL: "FABRICATION OF MULTI-LAYER EDDY CURRENT MICRO SENSORS FOR NON-DESTRUCTIVE INSPECTION OF SMALL DIAMETER PIPES" PROCEEDINGS OF THE WORKSHOP ON MICRO ELECTRICAL MECHANICAL SYSTEMS. (MEMS). AMSTERDAM, JAN. 29 - FEB. 2, 1995, NEW YORK, IEEE, US, Bd. WORKSHOP 8, 29. Januar 1995 (1995-01-29), Seiten 232-237, XP000555274 ISBN: 0-7803-2504-4
- UESAKA M ET AL: "EDDY-CURRENT TESTING BY FLEXIBLE MICROLOOP MAGNETIC SENSOR ARRAY" IEEE TRANSACTIONS ON MAGNETICS, IEEE INC. NEW YORK, US, Bd. 34, Nr. 4, 1. Juli 1998 (1998-07-01), Seiten 2287-2297, XP000773336 ISSN: 0018-9464
- SOTOSHI YAMADA ET AL: "EDDY-CURRENT TESTING PROBE COMPOSED OF PLANAR COILS" 1995 DIGESTS OF INTERMAG. INTERNATIONAL MAGNETICS CONFERENCE. SAN ANTONIO, APR. 18 - 21, 1995, PROCEEDINGS OF THE INTERNATIONAL MAGNETICS CONFERENCE (INTERMAG), NEW YORK, IEEE, US, 18. April 1995 (1995-04-18), Seiten CD-7, XP000581987 ISBN: 0-7803-2606-7

## Beschreibung

Die Erfindung liegt auf dem Gebiet der zerstörungsfreien Werkstoffprüfung.

Die Erfindung bezieht sich auf eine Wirbelstromsonde zur Wirbelstromprüfung eines Bauteils,
- mit einem ersten Substrat,
- in oder auf dem eine flache erste Sondenspulenanordnung angeordnet ist, die sich in einer ersten Fläche erstreckt, und die eine erste Spule mit einer Windung umfaßt, deren Länge, gemessen in der ersten Fläche und in einer ersten Längsrichtung, größer ist als ihre Breite, und
- mit einer flachen zweiten Sondenspulenanordnung, die sich in einer zweiten Fläche erstreckt, und die eine zweite Spule mit einer Windung umfaßt, deren Länge, gemessen in der zweiten Fläche und in einer zweiten Längsrichtung, größer ist als ihre Breite,
- wobei die beiden Sondenspulenanordnungen in einer Draufsicht auf das erste Substrat zumindest in einem Teilbereich überlappen.

In dem Fachartikel "Zerstörungsfreie Messung der Korrosionseinwirkung auf Hochtemperatur-Schutzschichten" von G. Dibelius, H. J. Krichel und U. Reimann, VGB Kraftwerkstechnik 70 (1990), Seite 762 bis 768, sind flache Wirbelstromspiralsonden beschrieben, die auf einem flexiblen Träger aufgebracht sind, so daß die Sonde der Krümmung an der Meßstelle folgen kann.

Aus der EP 0 228 177 A2 ist eine flexible Spule für die Wirbelstromprüfung bekannt, die auf einem flexiblen Substrat angebracht ist. Die Spule ist an vielseitige Oberflächengeometrien anpaßbar. Sie kann beispielsweise photolithographisch hergestellt werden.

Bei der zerstörungsfreien Werkstoffprüfung besteht ein Bedarf für Prüfsonden mit geringer Baugröße und insbesondere mit geringer Ankoppel- oder Auflagefläche auf dem zu prüfenden Werkstück oder Bauteil. Ein derartiger Bedarf besteht insbesondere bei der Prüfung in einer kerntechnischen Anlage, insbesondere wenn die zu prüfenden Bauteile schwer zugänglich sind oder aufgrund der Bauteilstruktur nur eine sehr geringe zugängliche und geeignete Ankoppelfläche aufweisen. Es besteht ferner ein Bedarf, die Prüfsonden derart auszugestalten, daß sie auch an stark gekrümmten Oberflächen einsetzbar sind.

Für zahlreiche Prüfaufgaben werden Wirbelstromsonden mit mehreren Sondenspulenanordnungen benötigt. Diese Notwendigkeit läuft der Forderung nach geringer Baugröße und/oder Ankoppelfläche zuwider, so daß sich das Problem ergibt, daß nicht beide Forderungen gleichzeitig erfüllbar sind.

Aus DE 30 50 497 C2 ist ein Wirbelstromgeber einer Einrichtung für zerstörungsfreie Prüfungen von Bohrungen in Werkstücken bekannt. Dieser weist unterschiedliche Wicklungen auf, die auf entgegengesetzten Seiten eines elastischen dielektrischen Substrats angeordnet sind, und die in einer Draufsicht auf das Substrat überlappen. Übereinander angeordnete flache Sondenspulenanordnungen sind außerdem in EP 0 867 718 A2 beschrieben. Sowohl diese Anordnung als auch die aus der DE 30 50 497 C2 bekannte sind - bei einer bestimmten Orientierung der Sonde - nur für entlang einer bestimmten Richtung orientierte Risse empfindlich. Zumindest ist ihre Empfindlichkeit bei anderen Rißorientierungen stark vermindert.

Der Erfindung liegt demzufolge die Aufgabe zugrunde, eine Wirbelstromsonde anzugeben, mit der Risse oder Defekte unterschiedlicher Orientierungen in einfacher Weise und mit hoher Empfindlichkeit detektierbar sind.

Die Aufgabe wird bezogen auf die Wirbelstromsonde der eingangs genannten Art gemäß der Erfindung dadurch gelöst, daß die erste Längsrichtung nicht parallel zur zweiten Längsrichtung orientiert ist.

Die Längsrichtungen können auch als Hauptachsen bezeichnet werden. Von der Hauptachse ist die Spulenachse zu unterscheiden, um die sich die Spulenwindungen winden.

Flach bedeutet im Zusammenhang mit den Sondenspulenanordnungen, daß die Ausdehnung der Sondenspulenanordnungen in der Draufsicht (Breite und Länge), insbesondere in einer zur Stapelrichtung senkrechten Fläche, erheblich größer ist als die Ausdehnung in einer zu dieser Fläche senkrechten Fläche (Höhe), insbesondere in einer Ebene parallel zur Stapelrichtung. Insbesondere ist die Breite und/oder Länge der Sondenspulenanordnungen 10mal bis 1000mal größer als ihre Höhe.

Die Windungen, Wicklungen oder Schleifen der ersten Spule und/oder der zweiten Spule verlaufen von einem Spulenmittelpunkt ausgehend insbesondere spiralförmig mit wachsendem Abstand zum Spulenmittelpunkt hin zu einem Spulenende. Dabei können die Windungen oder Spiralen sowohl rechteckigen als auch ovalen oder elliptischen Querschnitt aufweisen.

Bei der ersten Spule und der zweiten Spule, die entlang ihrer Längsrichtungen oder Hauptachsen ausgedehnt sind, haben die erzeugten magnetischen Feldlinien eine Vorzugsrichtung, so daß derartige Spulen oder Sondenspulenanordnungen besonders empfindlich für Risse oder Materialfehler sind, die in einer bestimmten Richtung ausgedehnt sind. Beispielsweise sind mit der ersten Spule und/oder der zweiten Spule ausschließlich Längsfehler oder ausschließlich Querfehler oder ausschließlich schräg liegende Fehler detektierbar. Mit anderen Worten: Die erste Spule und die zweite Spule erlauben eine spezifische Aussage hinsichtlich der Rißorientierung.

Dadurch, daß die Hauptachsen der ersten Sondenspulenanordnung und der zweiten Sondenspulenanordnung gekreuzt zueinander stehen, sind nicht nur Risse mit unterschiedlichen Orientierungen besonders empfindlich detektierbar (JA-NEIN-Aussage), sondern es ist vielmehr und besonders vorteilig auch möglich, eine Aussage über die Orientierung eines detektierten Risses oder Fehlers zu treffen. Da die Sondenspulenanordnungen überlappen, sind ihre Meßsignale nämlich ein- und demselben Abtastvolumen zuordenbar und somit ein- und demselben Riß.

Dadurch, daß die beiden Sondenspulenanordnungen zumindest teilweise übereinander angeordnet sind, ist die Wirbelstromsonde nach der Erfindung außerdem besonders kompakt und insbesondere nur mit kleiner Ankoppelfläche aufbaubar. Eine solche Wirbelstromsonde ist demzufolge besonders vielseitig und auch an schwer zugänglichen Stellen einsetzbar.

Jede der Sondenspulenanordnungen kann eine Sendespule und gesondert hiervon eine Empfangsspule aufweisen, so daß die Sondenspulenanordnungen transformatorisch arbeiten. Bevorzugt ist jedoch die parametrische Arbeitsweise der Sondenspulenanordnung, d.h. die Sondenspulenanordnungen weisen jeweils eine Spule auf, die sowohl als Sender als auch als Empfänger fungiert. Mit der letztgenannten Arbeitsweise ist die Wirbelstromsonde nämlich besonders platzsparend aufbaubar.

Die Spulen der Sondenspulenanordnung sind bevorzugt mit ihren Mittelpunkten übereinander, insbesondere konzentrisch, angeordnet. Dadurch ist es in vorteilhafter Weise möglich, die Prüfsignale der Sondenspulenanordnungen besonders präzise und fehlerfrei ein und demselben Raumbereich im Bauteil zuzuordnen.

Die Sondenspulenanordnungen sind bevorzugt in unterschiedlichen Modi betreibbar, so daß mit ihnen - insbesondere für ein und denselben Raumbereich im Bauteil - unterschiedliche Prüfergebnisse erhalten werden. Beispielsweise sind die Sondenspulenanordnungen mit unterschiedlichen Frequenzen betreibbar und tasten somit - wegen der von der Wirbelstromfrequenz abhängigen Eindringtiefe - unterschiedliche Tiefenbereiche im Bauteil ab.

Die erste Sondenspulenanordnung und die zweite Sondenspulenanordnung können auf der Vorder- bzw. Rückseite ein und desselben (ersten) Substrats angeordnet sein.

Bevorzugt, weil einfacher herstellbar, ist ein zweites Substrat vorhanden, in oder auf dem die zweite Sondenspulenanordnung angeordnet ist.

Nach einer bevorzugten Weiterbildung weist die Wirbelstromsonde weitere, einen Stapel bildend übereinander angeordnete Substrate auf, in oder auf denen jeweils eine weitere Sondenspulenanordnung angeordnet ist. Dadurch wird die Funktionalität der Wirbelstromsonde in vorteilhafter Weise weiter erhöht, da die weiteren Sondenspulenanordnungen beispielsweise in zur ersten Sondenspulenanordnung und zur zweiten Sondenspulenanordnung unterschiedlicher Weise betreibbar sind.

Vorzugsweise überlappt sich in einer Draufsicht auf eine Stirnseite des Stapels jede der weiteren Sondenspulenanordnungen mit wenigstens einer anderen Sondenspulenanordnung des Stapels zumindest teilweise.

Die erste und die zweite Sondenspulenanordnung werden vorzugsweise mit unterschiedlichen Frequenzen und/oder zeitlich gegenphasig getaktet betrieben. Dadurch ist in vorteilhafter Weise sicher vermieden, daß sich die beiden Sondenspulenanordnungen gegenseitig beeinflussen und die mit ihnen gewonnen Prüfergebnisse verfälscht sind.

Das erste Substrat bzw. wenigstens eines der Substrate ist bevorzugt eine Folie aus flexiblem Material.

Mit einer flexiblen Folie ist die Wirbelstromsonde noch besser an eine gekrümmte Oberfläche eines zu prüfenden Bauteils ankoppelbar, als sie dies bereits infolge ihrer kompakten Bauweise ist.

Das flexible Material ist beispielsweise Polyamid.

Die erste Fläche und die zweite Fläche verlaufen bevorzugt parallel zum Substrat oder zu einem der Substrate. Mit anderen Worten: Die Sondenspulenanordnungen sind entlang der Längs- und/oder Breitenausdehnung der Substrate oder des Substrats angeordnet.

Die Flächen sind insbesondere Ebenen, so daß die flächenhaften Sondenspulenanordnungen - zumindest bei nicht gebogener flexibler Folie - nicht gekrümmt sind.

Vorzugsweise stehen die erste Längsrichtung und die zweite Längsrichtung aufeinander senkrecht.

Weitere Spulen der weiteren Sondenspulenanordnungen können mit ihren Längsrichtungen nicht parallel zur ersten Längsrichtung und nicht parallel zur zweiten Längsrichtung angeordnet sein. Vorzugsweise sind insgesamt vier Spulen vorhanden, die mit ihren Längsrichtungen jeweils um 90° weiter gedreht sind, so daß Längsfehler (0°), Querfehler (90°) und schräg liegende Fehler (45°, 135°) mit ein und derselben Wirbelstromsonde detektierbar und hinsichtlich ihrer Lage beurteilbar sind.

Bei der Wirbelstromsonde nach der Erfindung sind die Sondenspulenanordnungen bevorzugt photolithographisch hergestellte Anordnungen von Leiterbahnen. Dadurch sind die Sondenspulenanordnungen in vorteilhafter Weise sehr dünn ausführbar und insbesondere mit der flexiblen Folie in einem weiten Bereich biegbar.

Eine Wirbelstromsonde gemäß der Erfindung kann dadurch hergestellt werden,
a) daß zunächst auf ein erstes Substrat photolithographisch eine erste Anordnung von Leiterbahnen und
b) auf ein zweites Substrat photolithographisch eine zweite Anordnung von Leiterbahnen aufgebracht wird, und
c) daß anschließend die beiden Substrate mit ihren parallelen Flachseiten übereinander angeordnet werden.

Vorzugsweise werden mindestens drei Substrate, die jeweils eine Anordnung von Leiterbahnen aufweisen, einen Stapel bildend übereinander angeordnet. Die stapelweise Anordnung der Substrate, wobei diese jeweils mit ihren parallelen Flachseiten übereinander angeordnet werden, stellt eine besonders einfache Herstellungsmethode für eine Wirbelstromsonde mit komplex und weitgehend beliebig formbaren Leiterbahnen dar.

Insbesondere umfassen die Anordnungen von Leiterbahnen Spulen, die - wie oben erläutert - hauptsächlich in einer Längsrichtung (Hauptachse) ausgedehnt sind. Durch das Übereinanderstapeln der einzelnen Substrate ist es dann besonders einfach möglich, die Hauptachsen der unterschiedlichen Anordnungen von Leiterbahnen gekreuzt zueinander auszurichten. In der Praxis bedeutet dies lediglich ein Drehen des zweiten Substrats beispielsweise um 90° bezüglich des ersten Substrats. Das zweite Substrat kann ansonsten beispielsweise zum ersten Substrat identisch sein.

Nach einer bevorzugten Ausgestaltung werden die Substrate miteinander fest verbunden. Dadurch wird eine besonders kompakte und robuste Wirbelstromsonde hergestellt.

Die Wirbelstromsonde nach der Erfindung wird nachfolgend anhand von Ausführungsbeispielen und der Figuren 1 bis 9 näher erläutert. Im einzelnen zeigen:
- FIG 1: ein erstes Ausführungsbeispiel einer Wirbelstromsonde nach der Erfindung in einer Seitenansicht,
- FIG 2: eine Draufsicht auf die in Figur 1 dargestellte und entlang der Linie II-II aufgeschlossenen Wirbelstromsonde,
- FIG 3: eine Draufsicht auf die Wirbelstromsonde der Figur 1,
- FIG 4: eine Draufsicht auf die Wirbelstromsonde der Figur 1 in vereinfachter Darstellung,
- FIG 5: ein zweites Ausführungsbeispiel einer Wirbelstromsonde nach der Erfindung in einer Seitenansicht,
- FIG 6: eine Draufsicht auf die Wirbelstromsonde der Figur 5 in vereinfachter Darstellung,
- FIG 7: ein drittes Ausführungsbeispiel einer Wirbelstromsonde nach der Erfindung in einer Seitenansicht,
- FIG 8: ein viertes Ausführungsbeispiel einer Wirbelstromsonde nach der Erfindung in einer Seitenansicht und
- FIG 9: ein fünftes Ausführungsbeispiel einer Wirbelstromsonde nach der Erfindung in einer vereinfachten Draufsicht.

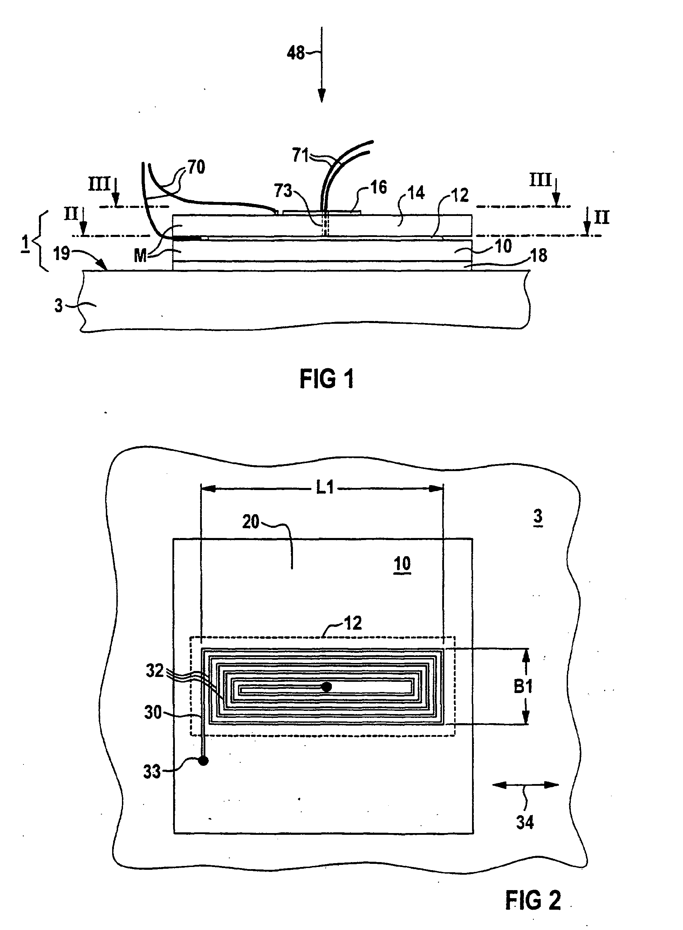

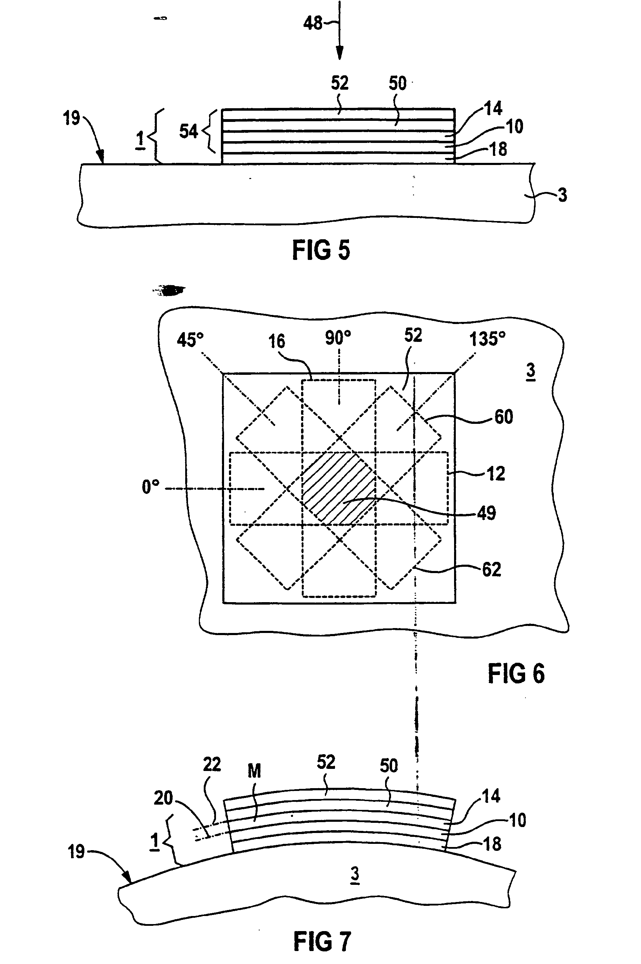

Figur 1 zeigt eine insgesamt mit 1 bezeichnete Wirbelstromsonde, die ein Bauteil 3 auf Risse oder Fehler untersucht. In Figur 1 (sowie in den nachfolgend beschriebenen Figuren 5, 7 und 8) sind die Höhe der einzelnen Schichten der Wirbelstromsonde 1, insbesondere der Substrate und der Sondenspulenanordnungen, aus Gründen der besseren Darstellbarkeit stark überhöht gezeichnet.

Die Wirbelstromsonde 1 umfaßt ein erstes Substrat 10, auf dem eine erste Sondenspulenanordnung 12 photolithographisch angebracht wurde. Auf der ersten Sondenspulenanordnung 12 liegt mit seiner Unterseite ein zweites Substrat 14 auf, das seinerseits eine zweite Sondenspulenanordnung 16 trägt. Die Unterseite des ersten Substrats 10 liegt über eine Schutzschicht 18 auf der Oberfläche 19 des Bauteils 3 auf, d.h. ist am Bauteil 3 angekoppelt.

Die Schutzschicht 18 besteht aus Aluminiumoxid.

Die Substrate 10, 14 sind aus einem flexiblen Material M, beispielsweise aus Polyamid, gefertigt. Ihre Höhe beträgt weniger als 1 mm oder weniger als 0,5 mm. Die Höhe der Leiterbahnen der Sondenspulenanordnungen 12, 16 beträgt weniger als 500 µm oder weniger als 200 µm.

In Figur 2 ist die erste Sondenspulenanordnung 12 auf dem ersten Substrat 10 näher dargestellt. Figur 2 zeigt eine Draufsicht auf die Wirbelstromsonde 1 der Figur 1, wobei hierbei die Wirbelstromsonde 1 der Figur 1 entlang der Linie II-II aufgeschlossen und das zweite Substrat und alles darüberliegende abgenommen wurden.

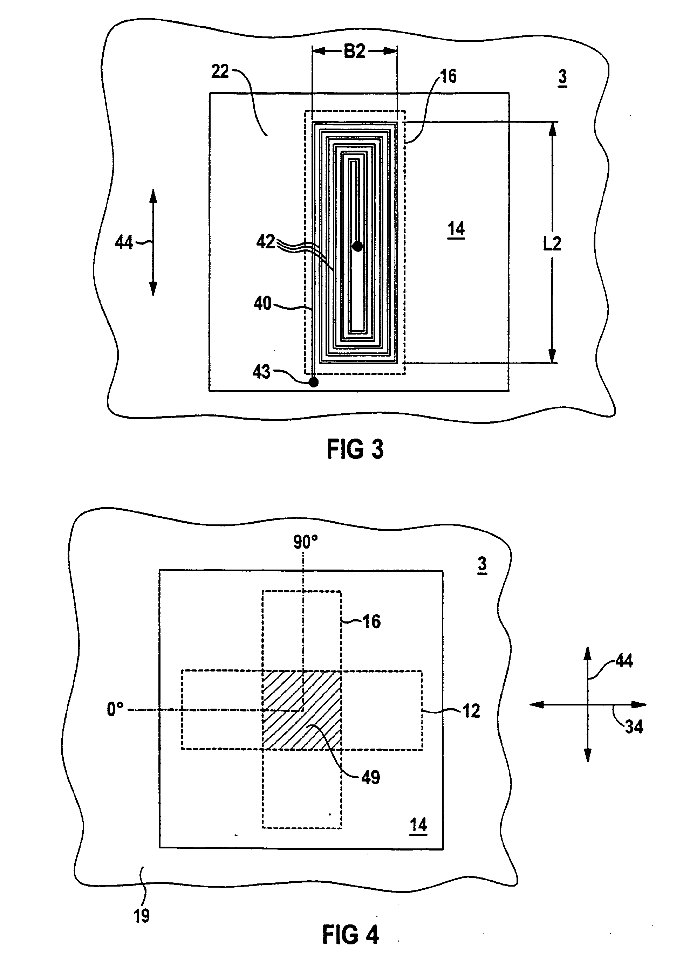

In gleicher Weise zeigt Figur 3 die zweite Sondenspulenanordnung 16 auf dem zweiten Substrat 14, wie sie bei einer Draufsicht auf die Wirbelstromsonde 1 der Figur 1 sichtbar sind.

Das erste Substrat 10 und das zweite Substrat 14 haben eine Längen- und Breitenausdehnung von etwa 20x20 mm oder 30x30 mm. Die Höhe der Sondenspulenanordnungen 12, 16 ist im Vergleich dazu gering, d.h. die Sondenspulenanordnungen 12, 16 sind äußerst flach ausgebildet. Sie erstrecken sich in einer ersten Fläche 20 (Figur 2) bzw. in einer zweiten Fläche 22 (Figur 3). Bei dem in den Figuren 1 bis 4 dargestellten ersten Ausführungsbeispiel sind diese Flächen 20, 22 eben.

Die Sondenspulenanordnungen 12, 16 weisen jeweils eine sich spiralförmig windende Spule auf. Die Spule der ersten Sondenspulenanordnung 12 weist Windungen 30, 32 auf, die sich spiralförmig vom Spulenmittelpunkt ausgehend zu einem äußeren Spulenende 33 kreuzungsfrei winden. Die einzelnen Windungen 30, 32 sind im wesentlichen äquidistant und als elektrische Leiterbahnen ausgebildet.

Die äußerste erste Windung 30 der Sondenspulenanordnung 12 ist entlang einer ersten Längsrichtung 34 weiter ausgedehnt als in senkrechter Richtung hierzu. Ihre Länge L1 entlang der ersten Längsrichtung 34 ist etwa dreimal so groß wie ihre Breite B1 senkrecht zur ersten Längsrichtung 34.

Die zweite Sondenspulenanordnung 16 (Figur 3) umfaßt in gleicher Weise eine erste Windung 40 und weitere Windungen 42, die sich vom Spulenmittelpunkt ausgehend spiralförmig und kreuzungsfrei zu einem außengelegenen Spulenende 43 winden. Die Länge L2 der durch die Windungen 40, 42 realisierten Spule entlang einer zweiten Längsrichtung 44 ist etwa dreimal so groß wie ihre Breite B2.

In einer Draufsicht 48 (Figur 1) überdecken sich nicht nur das erste Substrat 10 und das zweite Substrat 14 mit ihren gesamten Flächen, sondern auch die erste Sondenspulenanordnung 12 und die zweite Sondenspulenanordnung 16 in einem Teilbereich 49. Dies ist in Figur 4 verdeutlicht, in der die einzelnen Sondenspulenanordnungen 12, 16 - unter Weglassung der Leiterbahnen - vereinfachend dargestellt sind. Die Längsrichtungen 34, 44, entlang derer die Sondenspulenanordnungen 12 bzw. 16 hauptsächlich ausgedehnt sind, stehen senkrecht zueinander. Sie sind entlang einer mit 0° bzw. mit 90° bezeichneten Richtung orientiert. Mit der Wirbelstromsonde 1 der Figuren 1 bis 4 ist es somit möglich, eine Aussage über die Orientierung eines Fehlers oder Risses im Bauteil 3 zu treffen. Beispielsweise kann die Wirbelstromsonde 1 mit ihrer ersten Sondenspulenanordnung 12 und mit ihrer zweiten Sondenspulenanordnung 16 derart ausgerichtet und verfahren werden, daß eine der Sondenspulenanordnungen 12, 16 besonders für Längsfehler und die andere der Sondenspulenanordnungen 12, 16 besonders für Querfehler empfindlich ist. Bei einem etwa gleichstarken Ansprechen beider Sondenspulenanordnungen 12, 16 kann dann auf einen schräg liegenden Fehler geschlossen werden.

Figur 5 zeigt ein zweites Ausführungsbeispiel einer Wirbelstromsonde 1 nach der Erfindung, bei der zusätzlich zum ersten Substrat 10 und zum zweiten Substrat 14 weitere Substrate 50, 52 einen Stapel 54 bildend über dem Bauteil 3 angeordnet sind. Alle Substrate 10, 14, 50, 52 und darauf angeordnete Sondenspulenanordnungen sind parallel ausgerichtet und lückenlos übereinander gelegt. Die Substrate 10, 14, 50, 52 schließen auf allen Seiten bündig ab, so daß die Wirbelstromsonde 1 besonders kompakt und robust aufgebaut ist.

Die weiteren Substrate 50, 52 tragen weitere Sondenspulenanordnungen 60, 62, die in der (analog zur Figur 4) vereinfachten Draufsichtdarstellung der Figur 6 ersichtlich sind. Alle Sondenspulenanordnungen 12, 16, 60, 62 überlappen sich im Teilbereich 49. Die weiteren Sondenspulenanordnungen 60, 62 sind mit ihren Längsrichtungen um 45° bzw. 135° bezüglich der Längsrichtung ("0°") der ersten Sondenspulenanordnung 12 gedreht. Die weiteren Sondenspulenanordnungen 60, 62 sind also - Bezug nehmend auf Figur 4 - besonders für schräg liegende Fehler empfindlich, die somit besonders zuverlässig detektierbar und als solche erkennbar sind.

Bei beiden gezeigten Ausführungsbeispielen ist bei jeder Spule einer jeden Sondenspulenanordnung das äußere Ende der Spule durch einen seitlich aus dem Stapel 54 abgeführten Kontaktdraht kontaktiert. Bei den verdeckt unter einer darüberliegenden Sondenspulenanordnung angeordneten Spulen ist die Spulenmitte durch Kontaktdrähte kontaktiert, die durch eine Ausnehmung in dem/den darüberliegenden Substrat/en und der darüberliegenden Sondenspulenanordnung / den darüberliegenden Sondenspulenanordnungen nach außen geführt sind.

Der Einfachheit halber ist dies lediglich für das erste Ausführungsbeispiel in Figur 1 dargestellt. Die äußeren Spulenenden 33, 34 (Figuren 2, 3) sind über Kontaktdrähte 70 angeschlossen. Die elektrische Verbindung zu dem Spulenmittelpunkt der Spule der ersten Sondenspulenanordnung 12 (Figur 2) erfolgt mittels eines Kontaktdrahts 71, der durch einen Durchbruch oder eine Ausnehmung oder Bohrung 73, die durch das zweite Substrat 14 verläuft, zugeführt ist.

Figur 7 zeigt ein drittes Ausführungsbeispiel einer Wirbelstromsonde 1 nach der Erfindung, bei dem die Sondenspulenanordnungen 12, 16, 60, 62 entlang von gekrümmten Flächen 20, 22, ... ausgedehnt sind. Die Substrate 10, 14, 50, 52 der Wirbelstromsonde 1 der Figur 7 sind bereits ohne eine einwirkende Anpreßkraft an die Oberfläche des Bauteils 3 angepaßt.

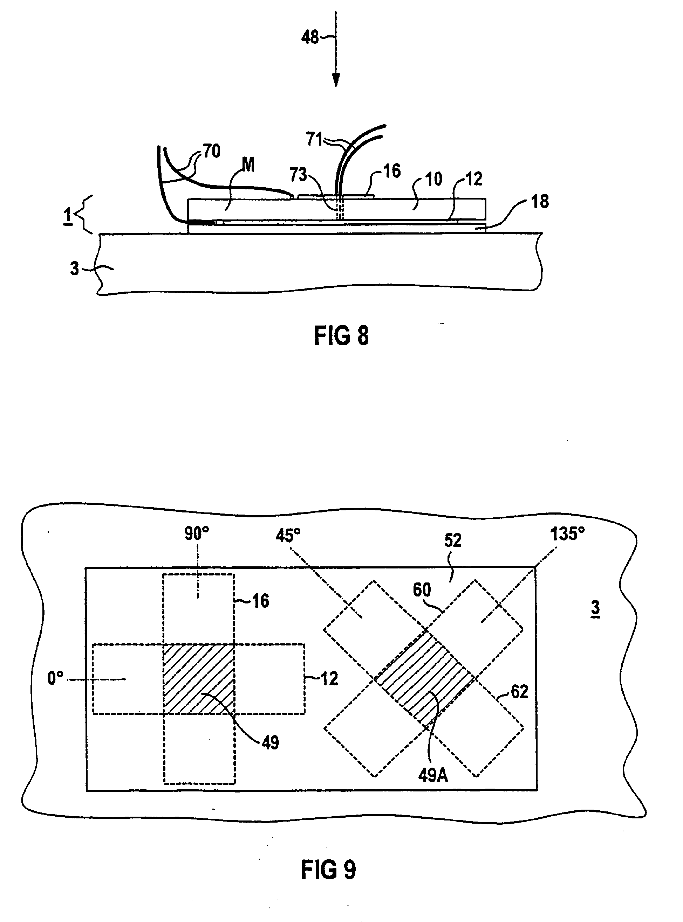

Bei dem in Figur 8 dargestellten vierten Ausführungsbeispiel einer Wirbelstromsonde 1 nach der Erfindung ist im Gegensatz zu dem in Figur 1 dargestellten ersten Ausführungsbeispiel nur ein erstes Substrat 10 und kein zweites Substrat 14 vorhanden. Die beiden Sondenspulenanordnungen 12, 16 sind auf der Unterseite bzw. der Oberseite ein und desselben Substrats, nämlich des ersten Substrats 10, aufgebracht.

Bei dem in Figur 9 dargestellten fünften Ausführungsbeispiel sind im Gegensatz zu Figur 6 die für Längs- und Querfehler hergerichteten Sondenspulenanordnungen 12, 16 seitlich neben den für schräg liegende Fehler hergerichteten Sondenspulenanordnungen 60, 62 auf ein und demselben Substrat 52 angeordnet. Die für Längsfehler hergerichtete erste Sondenspulenanordnung 12 und die für Querfehler hergerichtete zweite Sondenspulenanordnung 16 überlappen sich in einer Draufsicht 48 (siehe Figur 1) in einem Teilbereich 49. Die für Querrisse oder Querfehler hergerichteten weiteren Sondenspulenanordnungen 60, 62 überlappen sich in einem davon gesonderten weiteren Teilbereich 49A. Jeweils zwei der Sondenspulenanordnungen sind mit ihren Mittelpunkten übereinander angeordnet. Die Wirbelstromsonde 1 des fünften Ausführungsbeispiels der Figur 9 ist in analoger Weise zum ersten Ausführungsbeispiel auch mit zwei Substraten herstellbar.

Nach dem Übereinanderstapeln der Substrate werden diese beispielsweise durch Klebstoff unlösbar oder durch eine mechanische Spannvorrichtung lösbar fest miteinander verbunden. Die Wirbelstromsonde 1 kann in ein starres Gehäuse integriert sein.

Die Sondenspulenanordnungen 12, 16, 60, 62 werden mit einem elektrischen Wechselstrom einer Frequenz aus dem Bereich von 50 kHz bis 900 kHz erregt, so daß sie ein magnetisches Wechselfeld dieser Frequenz in das Bauteil 3 einkoppeln. Sie dienen gleichzeitig als nach dem Induktionsprinzip arbeitende Empfängerspulen, welche im Bauteil 3 indizierte Wirbelströme detektieren.

## Patentansprüche

1. Wirbelstromsonde (1) zur Wirbelstromprüfung eines Bauteils (3),
- mit einem ersten Substrat (10),
- in oder auf dem eine flache erste Sondenspulenanordnung (12) angeordnet ist, die sich in einer ersten Fläche (20) erstreckt, und die eine erste Spule mit einer Windung (30) umfaßt, deren Länge (L1), gemessen in der ersten Fläche (20) und in einer ersten Längsrichtung (34), größer ist als ihre Breite (B1), und
- mit einer flachen zweiten Sondenspulenanordnung (16), die sich in einer zweiten Fläche (22) erstreckt, und die eine zweite Spule mit einer Windung (40) umfaßt, deren Länge (L2), gemessen in der zweiten Fläche (22) und in einer zweiten Längsrichtung (44), größer ist als ihre Breite (B2),
- wobei die beiden Sondenspulenanordnungen (12, 16) in einer Draufsicht (48) auf das erste Substrat (10) zumindest in einem Teilbereich (49) überlappen,
**dadurch gekennzeichnet, daß** die erste Längsrichtung (34) nicht parallel zur zweiten Längsrichtung (44) orientiert ist.

2. Wirbelstromsonde (1) nach Anspruch 1,
**gekennzeichnet durch** ein zweites Substrat (14), in oder auf dem die zweite Sondenspulenanordnung (16) angeordnet ist.

3. Wirbelstromsonde (1) nach Anspruch 1 oder 2,
**gekennzeichnet durch** weitere, einen Stapel (54) bildend übereinander angeordnete Substrate (50, 52), in oder auf denen jeweils eine weitere Sondenspulenanordnung (60 bzw. 62) angeordnet ist (Figur 5).

4. Wirbelstromsonde (1) nach Anspruch 3,
**dadurch gekennzeichnet, daß** sich in einer Draufsicht (48) auf eine Stirnseite des Stapels (54) jede der weiteren Sondenspulenanordnungen (60, 62) mit wenigstens einer anderen Sondenspulenanordnung (12, 16, 60, 62) des Stapels (54) zumindest teilweise überlappt.

5. Wirbelstromsonde (1) nach einem der Ansprüche 1 bis 4 oder 2 bis 4,
**dadurch gekennzeichnet, daß** das erste Substrat (10) bzw. wenigstens eines der Substrate (10, 14, 50, 52) eine Folie aus flexiblem Material (M) ist.

6. Wirbelstromsonde (1) nach einem der Ansprüche 1 bis 5,
**dadurch gekennzeichnet, daß** die erste Fläche (20) und die zweite Fläche (22) parallel zum Substrat (10, 14) verlaufen.

7. Wirbelstromsonde (1) nach einem der Ansprüche 1 bis 6,
**dadurch gekennzeichnet, daß** die erste Längsrichtung (34) und die zweite Längsrichtung (44) aufeinander senkrecht stehen (Figur 4).

8. Wirbelstromsonde (1) nach einem der Ansprüche 1 bis 7,
**dadurch gekennzeichnet, daß** Sondenspulenanordnungen (12, 16, 60, 62) photolithographisch hergestellte Anordnungen von Leiterbahnen sind.

## Claims

1. Eddy current sensor (1) for eddy current testing of a component (3),
- with a first substrate (10),
- in or on which is arranged a flat first sensor coil arrangement (12) that extends in a first plane (20) and surrounds a first coil with a winding (30), the length (L1) of which measured in the first plane (20) and in a first longitudinal direction (34) is larger than its width (B1), and
- with a flat second sensor coil arrangement (16) that extends in a second surface (22) and surrounds a second coil with a winding (40), the length (L2) of which measured in the second plane (20) and in a second longitudinal direction (44) is larger than its width (B2),
- where the two sensor coil arrangements (12, 16) in a top view (48) overlap on the first substrate (10) at least in a part area (49),
**characterised in that** the first longitudinal direction (34) is not oriented parallel to the second longitudinal direction (44).

2. Eddy current sensor (1) according to Claim 1,
**characterised by** a second substrate (14) in or on which is arranged the second sensor coil arrangement (16) .

3. Eddy current sensor (1) according to Claim 1 or 2,
**characterised by** further substrates (50, 52) arranged above each other to form a stack (54), in or on each of which is arranged a further sensor coil arrangement (60, 62) (Figure 5).

4. Eddy current sensor (1) according to Claim 3,
**characterised in that** in a top view (48) onto a face of the stack (54) each of the further sensor coil arrangements (60, 62) overlaps at least partly with at least one other sensor coil arrangement (12, 16, 60, 62) of the stack (54) .

5. Eddy current sensor (1) according to any of Claims 1 to 4 or 2 to 4, **characterised in that** the first substrate (10) or at least one of the substrates (10, 14, 50, 52) is a film of flexible material (M).

6. Eddy current sensor (1) according to any of Claims 1 to 5, **characterised in that** the first plane (20) and the second plane (22) run parallel to the substrate (10, 14).

7. Eddy current sensor (1) according to any of Claims 1 to 6, **characterised in that** the first longitudinal direction (34) and the second longitudinal direction (44) are perpendicular to each other (Figure 4).

8. Eddy current sensor (1) according to any of Claims 1 to 7, **characterised in that** the sensor coil arrangements (12, 16, 60, 62) are photolithographically produced arrangements of conductor tracks.

## Revendications

1. Capteur (1) de courant de Foucault pour contrôler les courants de Foucault d'un composant (3),
- comprenant un premier substrat (10),
- dans lequel ou sur lequel est disposé un premier dispositif (12) plat de bobine de capteur, qui s'étend dans une première surface (20) et qui comprend une première bobine ayant un enroulement (30) dont la longueur (L1), mesurée dans la première surface (20) et dans une première direction (34) longitudinale est plus grande que sa largeur (B1), et
- comprenant un deuxième dispositif (16) plat de bobine de capteur, qui s'étend dans une deuxième surface (22) et qui comprend une deuxième bobine ayant un enroulement (40) dont la longueur, mesurée dans la deuxième surface (22) et dans une deuxième direction (44) longitudinale, est plus grande que sa largeur (B2),
- dans lequel les deux dispositifs (12, 16) de bobine de capteur se chevauchent dans une vue (48) en plan sur le premier substrat (10) au moins dans une zone (49) partielle,
**caractérisée**
**en ce que** la première direction (34) longitudinale n'est pas parallèle à la deuxième direction (44) longitudinale.

2. Capteur (1) de courant de Foucault suivant la revendication 1,
**caractérisé par** un deuxième substrat disposé dans ou sur le deuxième dispositif (16) de bobine de capteur.

3. Capteur (1) de courant de Foucault suivant la revendication 1 ou 2,
**caractérisé par** d'autres substrats (50, 52) qui sont disposés les uns sur les autres en formant une pile (54) et dans lesquels ou sur lesquels est disposé respectivement un autre dispositif (60 ou 62) de bobine de capteur (figure 5).

4. Capteur (1) de courant de Foucault suivant la revendication 3,
**caractérisé en ce que** dans une vue (48) en plan, sur un côté frontal de la pile (54) chacun des autres dispositifs (60, 62) de bobine de capteurs est à chevauchement au moins en partie avec au moins un autre dispositif (12, 16, 60, 62) de bobine de capteur de la pile (54).

5. Capteur (1) de courant de Foucault suivant l'une des revendications 1 à 4 ou 2 à 4,
**caractérisé en ce que** le premier substrat (10) ou au moins l'un des substrats (10, 14, 50, 52) est une feuille en une matière (M) souple.

6. Capteur (1) de courant de Foucault suivant l'une des revendications 1 à 5,
**caractérisé en ce que** la première surface (20) et la deuxième surface (22) s'étendent parallèlement au substrat (10, 14).

7. Capteur (1) de courant de Foucault suivant l'une des revendications 1 à 6,
**caractérisé en ce que** la première direction (34) longitudinale et la deuxième direction (44) longitudinale sont perpendiculaires entre elles (figure 4).

8. Capteur (1) de courant de Foucault suivant l'une des revendications 1 à 7,
**caractérisé en ce que** les dispositifs (12, 16, 60, 62) de bobine de capteur sont des dispositifs de pistes conductrices qui ont été produites par voie photolithographique.
